(19) Europäisches Patentamt / European Patent Office / Office européen des brevets

(11) **EP 1 525 283 B1**

(12) **FASCICULE DE BREVET EUROPEEN**

(45) Date de publication et mention de la délivrance du brevet:
**16.09.2009 Bulletin 2009/38**

(51) Int Cl.:
*C09J 153/00* (2006.01)       *A61K 9/70* (2006.01)
*A61F 13/02* (2006.01)       *G09F 3/10* (2006.01)

(21) Numéro de dépôt: 03756502.5

(22) Date de dépôt: **21.07.2003**

(86) Numéro de dépôt international:
**PCT/FR2003/002293**

(87) Numéro de publication internationale:
**WO 2004/012625 (12.02.2004 Gazette 2004/07)**

(54) **UTILISATION D'UN COPOLYMERE A BLOCS COMPORTANT AU MOINS UN BLOC HYDROPHILE**

VERWENDUNG EINES BLOCKPOLYMERES MIT MINDESTENS EINEM HYDROPHILENBLOCK

USE OF A BLOCK COPOLYMER COMPRISING AT LEAST ONE HYDROPHILIC BLOCK

(84) Etats contractants désignés:
**AT BE BG CH CY CZ DE DK EE ES FI FR GB GR HU IE IT LI LU MC NL PT RO SE SI SK TR**

(30) Priorité: **26.07.2002 FR 0209592**

(43) Date de publication de la demande:
**27.04.2005 Bulletin 2005/17**

(73) Titulaire: **ARKEMA FRANCE**
**92700 Colombes (FR)**

(72) Inventeurs:
• **GUERRET, Olivier**
  **F- 69890 La Tour de Salvagny (FR)**
• **EL BOUNIA, Nour, Eddine**
  **F-64300 Orthez (FR)**
• **POIVET, Sylwia**
  **F- 60200 Compiegne (FR)**
• **NALLET, Frédéric**
  **F-33800 Bordeaux (FR)**

• **FABRE, Pascale**
  **F-33000 Bordeaux (FR)**
• **PAPON, Eric**
  **F-33350 Saint Magne de Castillon (FR)**
• **GNANOU, Yves**
  **F-33400 Talence (FR)**
• **SCHIERHOLZ, Kai**
  **F - 34000 Montpellier (FR)**

(74) Mandataire: **Lhoste, Catherine et al**
**ARKEMA FRANCE**
**Département Propriété Industrielle**
**420 Rue d'Estienne d'Orves**
**92705 Colombes Cedex (FR)**

(56) Documents cités:
|  |  |
|---|---|
| EP-A- 0 286 376 | WO-A-02/28932 |
| WO-A-02/051947 | DE-A- 10 036 804 |
| DE-A- 19 704 714 | US-A1- 2001 044 498 |
| US-A1- 2002 010 267 | US-A1- 2002 013 414 |
| US-B1- 6 262 206 | US-B1- 6 410 005 |

EP 1 525 283 B1

**Description**

La présente invention se rapporte au domaine des copolymères à blocs, particulièrement au domaine des copolymères à blocs ayant au moins un bloc hydrophile et plus particulièrement à l'utilisation de tels copolymères dans les formulations adhésives notamment les formulations adhésives efficaces aussi bien à sec qu'en milieu humide.

Les formulations adhésives de l'invention peuvent être utilisées en milieu humide en particulier pour tout ce qui concerne l'adhésion sur la peau pour des nombreuses applications médicales (patch, prothèses) ou paramédicales (pansements)qui doivent adhérer même après un passage dans l'eau ainsi que dans la préparation d'étiquettes.

Les solutions actuelles dans le domaine de l'adhésion en milieu humide sont de type gomme acrylique (hot melt ou latex) polyacétate de vinyle, polyvinylpyrrolidone, silicones ou polyurethane. La plupart de ces produits nécessitent une réticulation chimique de type liaison hydrogène, réticulation UV, réticulation péroxydique ou réticulation humide dans le cas des silanes. Notons qu'un des paramètres clés pour proposer une formulation adhésive destinée à une application cutanée réside dans le fait que l'utilisation de solvants non bio-compatibles n'est pas permise ; toutes les solutions évoquées pour créer un adhésif se font soit en fondu (Hot melt) soit par réaction in vivo.

Une autre solution envisageable pour éviter l'emploi de solvant consiste à utiliser les copolymères à blocs qui du fait de leur structure présentent à température d'usage les caractéristiques des matériaux réticulés. De manière générale les copolymères à blocs utilisés dans le domaine des formulations adhésives sont de type styrènique/diènique. Or les monomères styrèniques et dièniques sont hydrophobes et lorsqu'on s'en sert pour coller des substrats en milieu humide, l'eau vient empêcher un bon contact des surfaces des substrats avec l'adhésif. Des copolymères tout acryliques ont aussi été envisagés (Mancinelli P.A. Seminar Proceeding (Pressure Sensitive Tape Council), 2-5 May 1989, 161-181,) mais l'hydrophobie des acrylate et méthacrylate ne permet pas d'adhésion en milieu humide.

Le problème que cherche à résoudre l'invention est donc de trouver des formules de copolymères à blocs susceptibles d'entrer dans des formulations adhésives collant aussi bien en milieu sec qu'en milieu humide.

La demanderesse a trouvé que la solution aux problèmes évoqués précédemment réside dans l'utilisation dans les formulations adhésives d'un copolymère à blocs ayant au moins un bloc fortement hydrophile et au moins un bloc hydrophobe ou très peu hydrophile.

Par très peu hydrophile, la demanderesse entend des blocs dont la capacité d'absorption d'eau $w_\infty$, comme définie plus loin, est inférieure à 20% de préférence inférieure à 10%.

Le bloc hydrophile est rigide et constitue la phase minoritaire dispersée dans des nanodomaines (capsules, cylindres ou lamelles) alors que le bloc hydrophobe a un caractère élastomère et constitue la phase continue.

En effet la demanderesse a d'abord constaté que pour un adhésif de type copolymère à blocs, la phase continue qui permet l'adhésion est en général une phase hydrophobe car il n'existe pas de monomères vraiment hydrophiles et élastomères (exception faite de l'acrylate de méthoxyéthyle, que la demanderesse a écarté du champ de ses investigation du fait de sa toxicité). De ce fait l'adhésion en milieu humide est rendue difficile. De manière surprenante, la demanderesse s'est aperçue que des domaines de polymères hydrophiles nanodispersés dans la matrice hydrophobe permettent de rendre le matériau collant même en milieu humide.

En effet, dans un matériau nanostructuré dont la phase dure est minoritaire et hydrophile, l'eau pénètre très rapidement la structure en allant plastifier les domaines hydrophiles. L'élastomère hydrophobe qui absorbe en moyenne de 1 à 2 % en poids d'eau ne confine pas l'eau entre les deux surfaces à coller mais la véhicule vers les domaines hydrophiles qui agissent comme des éponges. La nanostructuration demeure malgré la plastification de ces domaines ce qui maintient les propriétés viscoélastiques du matériau et donc ses propriétés adhésives.

La demanderesse a montré comme expliqué plus loin que ses copolymères à blocs confèrent aux formulations adhésives en milieu humide une adhésion très rapide, une perméabilité à l'eau élevée ainsi qu'une facilité de mise en oeuvre sans post réticulation.

L'invention a pour objet l'utilisation d'un copolymère à blocs ayant au moins un bloc hydrophile (B) rigide constituant la phase minoritaire dispersée sous la forme de nanodomaines et au moins un bloc hydrophobe (A) à caractère élastomère ayant une capacité d'absorption d'eau $w_\infty$ (A) inférieure à 20%, constituant la phase majoritaire continue, comme liant dans une composition adhésive pour adhésion en milieu humide.

Les copolymères de l'invention répondent à la formule générale suivante :

$$[(A)x-(B)]n$$

dans laquelle x est compris entre 1 et 8, n est un entier compris entre 1 et 3 , A et B représentent respectivement de 50 à 99 % , de préférence de 65 à 95 %en poids et de 1 à 50 % de préférence de 5 à 35% en poids du poids total du copolymère. La masse moyenne en nombre (Mn) du copolymère est comprise entre 5000 g/mol et 300000 g/mol avec un indice de polydispersité compris entre 1.1 et 3.

**EP 1 525 283 B1**

Selon l'invention la force adhésive de la composition ou de la formulation dépend de la différence de capacité à absorber l'eau de chaque bloc désigné ci-après par $w_\infty$ est estimée comme indiqué ci-après et exprimée en %.

**<u>Méthode pour déterminer $w_\infty$ :</u>**

On prépare une couche mince d'un échantillon sec de polymère qu'on expose à une atmosphère à 98% d'humidité et thermostatée à 22˚C. L'absorption d'eau est ensuite mesurée selon l'équation :

$$w(t) = \frac{m(t) - m^\circ}{m^\circ} \%$$

 m(t)désigne la masse de l'échantillon en fonction du temps, m˚ la masse initiale humide et woo correspond alors au plateau de w(t) atteint au bout d'un temps long.

Dans le cas du polydiméthylacrylamide, l'absorption d'eau est de 113% tandis que celle du polyacrylate de butyle est de 1,6%. La diffusion de l'eau à travers un matériau suit alors une loi de Fick :

Pour w<0,6 $w_\infty$ ,   $\frac{w(t)}{w_\infty} = \frac{4}{e} * (\frac{D * t}{\pi})^{1/2}$,   où e désigne l'épaisseur de l'échantillon. Par exemple dans le cas du polydiméthylacrylamide, la diffusion D vaut 3.10-13.s-1.

Selon l'invention l'optimum en terme de force adhésive est atteint avec un rapport $w_\infty$ (B)/ $w_\infty$ (A) supérieur à 1 de préférence supérieur à 10 et plus précisément supérieur à 40.

Selon le mode préféré de l'invention $w_\infty$ (A) est inférieur à 5 % et $w_\infty$ (B)/ $w_\infty$ (A) est supérieur à 20.

A présente une température de transition vitreuse (Tg(A) ) inférieur à 30˚c et de ce fait est qualifié par bloc à caractère élastomère. En revanche B doit présenter une Tg (Tg(B)) supérieur à 50˚c. Préférentiellement Tg(A) est comprise entre -120˚C et 0˚C, Tg(B) est comprise entre 20˚C et 160˚C

Les copolymères de l'invention peuvent être obtenus par les techniques classiques de polymérisation en solution organique ou aqueuse, en émulsion ou en masse comme décrit dans International Journal of Adhesion & Adhesives 22,37-40 (2002). Ils sont de préférence préparés par polymérisation radicalaire contrôlée (PRC) en solution ou en masse.

D'autres techniques sont possible mais plus sensibles aux fonctions réactives des monomères telle que les amides (par exemple par la polymérisation anionique). L'avantage de la PRC est d'être très tolérante pour le choix des monomères et c'est pour cela que la demanderesse a utilisé cette technique de synthèse.

Le mode de préparation préféré de l'invention est celui décrit dans la demande de brevet FR 99 01998 du 18 février 1999 publiée sous le numéro FR 2789991.

A est obtenu par la polymérisation d'au moins un monomère choisi dans le groupe contenant les monomères hydrophobes tels que les esters acryliques comme l'acrylate de butyle ou l'acrylate d'héxyle, les diènes conjuguées. Il est de préférence l'acrylate de butyle.

B est obtenu par la polymérisation d'au moins un monomère choisi dans le groupe contenant les monomères hydrophiles tels que l'acide acrylique, l'acide méthacrylique l'acrylamide, le diméthylacrylamide, la vinylpyrrolidone. Il est de préférence le diméthylacrylamide. Les sels monovalents d'acide acryliques ou méthacryliques tels que les sels de sodium ou de lithium, sont aussi au nombre de ces monomères hydrophiles.

A et B peuvent contenir respectivement de restes de monomères hydrophiles et hydrophobes à condition que le rapport de leur capacité à absorber l'eau reste dans la fourchette définie précédemment.

La nanostructuration du copolymère est la résultante d'un ensemble de paramètres tels que la nature chimique et la longueur des séquences. Quelque soit le choix opéré pour A et B il est primordial que la nanostructuration soit conservée. Les considérations permettant de conserver la nanostructuration sont connues de l'homme du métier et on pourra se reporter à la référence : G. Holden & al dans « Thermoplastic elastomers » 2ème édition, Carl Hanser Verlag, Munich, Vienna, New York, 1996.

Les compositions de l'invention contiennent en outre tous les additifs nécessaires à leur mise en forme ainsi que les additifs exigés par les applications. L'homme du métier sait choisir ces additifs comme il sait définir les conditions de mise en oeuvre en fonction de l'application visée.

De toutes les manières les compositions de l'invention ne demandent pas de post réticulation après leur mise en oeuvre.

Les formulations adhésives de l'invention peuvent être utilisées en milieu humide en particulier pour tout ce qui concerne l'adhésion sur la peau pour des nombreuses applications médicales (patch, prothèses; ou paramédicales (pansements) qui doivent adhérer même après un passage dans l'eau ainsi que dans le domaine de l'étiquetage.

Les exemples suivants illustrent l'invention.

### Exemples :

Les exemples 1 à 9 sont selon l'invention. Les exemples 10 et 11 sont comparatifs.

La synthèse des copolymères PDMA-b-PAbu (poly(N,N-diméthylacrylamide)-bloc-polyacrylate de n-butyle) est effectuée en commençant par le bloc PDMA. Le PDMA est synthétisé par polymérisation radicalaire contrôlée (PRC). L'agent de contrôle c'est le N-tert-butyl-1-diéthylphosphono-2,2-diméthyl-propyl nitroxyde désigné ci-après par SG1.

### Purification des réactifs

Le poly(N,N-diméthylacrylamide) est stocké dans un dessiccateur sous vide ou sous azote. L'acrylate de n-butyle est cryodistillé sur hydrure de calcium et conservé au réfrigérateur dans une burette graduée avec rodage sous azote.

L'azo-bis-isobutyronitrile (AIBN) est recristallisé dans l'éther et séché sous vide avant d'être stocké au réfrigérateur dans un ballon sous azote.

Le SG1 (83 et 90%) est utilisé comme livré.

Les solvants pour la précipitation sont de la qualité d'analyse et utilisés sans purification.

### Synthèse

Les masses calculées (voir ci-dessous) du macroamorceur (PDMA) et du $SG1_{exc}$ sont introduites dans un schlenk muni d'un barreau aimanté. Le schlenk est branché à la burette, celle-ci est mise sous légère surpression d'azote afin d'ajouter le volume souhaité de monomère. Le milieu réactionnel est bien homogénéisé et soumis à 3-4 cycles vide (schlenk plongé dans de l'azote liquide) / azote, pour enlever toute trace d'oxygène. Le schlenk est ensuite plongé dans un bain d'huile à 110˚C.

Le polymère obtenu est dissous dans du THF, précipité dans un mélange méthanol / eau = 2 / 1 à 0˚C et ensuite filtré avec un fritté (no. 4, à 0˚C). Dans les cas où une partie de copolymère passe le fritté, le filtrat est centrifugé (10 000 t/min, 10 min, température ambiante).

Le résidu est séché dans une étuve à 40˚C sous vide (on ne dépassera pas 50˚C l) pendant 2-3 jours.

### Calcul des masses

Les masses calculées du PDMA et du SG1 dépendent de la masse totale m et de la masse moyenne en nombre $M_n$ visées du copolymère ainsi que de la conversion. Ces trois paramètres doivent être choisi en premier (voir paragraphe ci-dessus). Les chaînes sont « protégées » par le SG1. Cependant, pour maintenir les indices de polymolécularité aussi petites que possible, il est recommandé d'ajouter un excès de SG1. Ensuite la masse $m_{bl1}$ du premier bloc et la masse $m_{SG1}$ du SG1 sont calculées comme suit :

- Masse du premier bloc :
  **Formule universelle** :

$$m_{bl} = \frac{\overline{M_{nbl1}} \times V_{mono\_bl2+solv} \times d_{mono\_bl2} \times conv.}{M_{nbl2,visée} \times n_{radicaux}}$$

avec :

$m_{bl1}$ = masse bloc 1

$\overline{M_n}$ = masse moyenne en nombre

$V_{mono\ bl2+solv.}$= volume monomère bloc 2 plus volume solvant

$d_{mono\ bl2}$ = densité du monomère bloc 2

$d_{mono\ bl2}$ = densité du monomère bloc 2

$n_{radiccaux}$ = nombre des radicaux par molécule amorceur

conv. = taux de conversion ($n_{monomer\ t=0}$ / $n_{monomer\ t=0}$)

Ici :

$$m_{PDMA} = \frac{\overline{M_{nPDMA}} \times m_{Abu} \times conv.}{M_{nAbuvisée}}$$

- Masse du SG1 en excès:

On utilisera de préférence les ratios des concentrations [$SG1_{exc}$] / [(macro-)amorceur] = 0,2-1,0 Ici :

$$m_{SG1} \approx 293 \text{ x } (\text{« ratio »}) \text{ x } m_{PDMA} / \overline{M_{nPDMA}}$$

Les caractéristiques des produits obtenus sont résumées dans le tableau 1.

Application : résultats applicatifs.

**A/** Préparation des formulations adhésives

Les adhésifs sont préparés de la manière suivante :

- 450 $\mu$L d'une solution à 15 % de copolymère dans le dioxane sont déposés sur une plaque en aluminium anodisé (2.5x2.5x0.1 cm). Une résine tackifiante ou plastifiante peut être ajoutée à la solution selon des proportions connues de l'homme de l'art.

- le solvant s'évapore pendant deux jours à température ambiante (sous une boîte de Pétri) avant de le sécher complètement dans une étuve sous vide à 50 °C pendant deux jours supplémentaires.

Les films ainsi obtenus ont une épaisseur de $90 \pm 10$ $\mu$m.

**B/** Description de la méthode de mesure de l'adhésion

Les propriétés de tack des copolymères sont mesurées sur surface sèche et humide par la méthode du *probe tack test*. Elle consiste en :

- **une étape de compression** : on approche un indenteur de l'adhésif jusqu'à atteindre une force de contact nominale $F_c$.
- **une étape de relaxation :** on laisse l'adhésif relaxer pendant un temps de contact $t_c$ à épaisseur constante.
- **une étape de traction** : on éloigne l'indenteur à vitesse constante v.

Les expériences ont été réalisées avec une machine de traction commercialisée par la société Zwick. Un moteur permet le déplacement vertical de l'indenteur. Ce dernier est relié à un capteur de force de 100 N fixé à une traverse. Le capteur de force ainsi qu'un capteur de position nous donnent accès à chaque instant (t) à la force et à la position de la traverse. Les expériences sont réalisées à température ambiante, $F_c$ = 35 N, $t_c$ = 100 s et v = 10 mm/min.

L'indenteur utilisé est un cylindre de surface plane (7 mm de diamètre) en inox. Lors des mesures sur surface humide, l'indenteur est trempé dans un bécher rempli d'eau distillée de telle sorte qu'une goutte recouvre toute sa surface.

Les courbes de tack représentent uniquement la partie relative à la séparation du lien dans les coordonnées contrainte-déplacement. La contrainte $\sigma$ est obtenue en normalisant la force par l'aire de contact. Cette dernière est déterminée en mesurant, une fois l'expérience terminée, l'aire de la trace laissée par l'indenteur sur l'adhésif. Le déplacement d est celui de l'indenteur.

L'énergie de tack G correspond à l'intégrale de la courbe en coordonnées contrainte-déplacement et représente l'énergie nécessaire à fournir pour rompre le lien adhésif.

1. Mesure de l'adhésion en milieu sec

Les résultats sont donnés dans le tableau 1

Là comparaison des échantillons préparés en 1 avec un polyacrylate de butyle (PABu) homopolymère montre l'importance de la nanostructuration pour obtenir la propriété d'adhésion. La comparaison avec la formulation à partir de copolymère triblocs de type Kraton (SBS) montre qu'en milieu sec les copolymères diblocs préparés en 1 sont moins adhésifs qu'une formulation tribloc.

2. Mesure de l'adhésion en milieu humide :

Les résultats sont données dans le tableau 1

La comparaison montre que les formulations à base de copolymères 2 ou 3 deviennent plus collantes que la formulation témoin à base de SBS.

**Tableau 1 : caractéristiques des produits testés et résultats obtenus :**

| N° de l'essai | RESULTATS ADHESION | | | | |
|---|---|---|---|---|---|
| | Mn copolymère | Indice de polydispersité | milieu sec | | Milieu humide |
| | | | Module (G/cm$^2$) | type | Module(G/cm$^2$) |
| 1 | 83000 | 1.20 | 120 | Cohésive | |
| 2 | 73000 | 1.29 | 120 | Cohésive | 245 |
| 3 | 158000 | 1.40 | 380 | Adhésive | 125 |
| 4 | 54400 | | 100 | Cohésive | |
| 5 | 63000 | | 100 | Cohésive | |
| 6 | 72000 | | 110 | Cohésive | |
| 7 | 94000 | | 180 | Cohésive | |
| 8 | 75000 | | 120 | Cohésive | |
| 9 | 85000 | | 135 | Cohésive | |
| 10 : SBS | | | 600 | Adhésive | 25 |
| 11 : PABu | 65000 | 1.2 | 40 | | |

**Revendications**

**1.** Utilisation d'un copolymère à blocs ayant au moins un bloc hydrophile (B) rigide constituant la phase minoritaire dispersée sous la forme de nanodomaines et au moins un bloc hydrophobe (A) à caractère élastomère ayant une capacité d'absorption d'eau $w_\infty$ (A) inférieure à 20%, constituant la phase majoritaire continue, comme liant dans une composition adhésive pour adhésion en milieu humide.

**2.** Utilisation selon la revendication 1, ledit copolymère à blocs répondant à la structure générale suivante

$$[(A)x\text{-}(B)]n$$

dans laquelle x est compris entre 1 et 8, n est un entier compris entre 1 et 3, A et B représentant respectivement de 50 à 99 % , de préférence de 65 à 95 % en poids et de 1 à 50 % de préférence de 5 à 35% en poids du poids total du copolymère, la masse moyenne en nombre (Mn) du copolymère étant comprise entre 5000 g/mol et 300000 g/mol avec un indice de polydispersité compris entre 1,1 et 3.

**3.** Utilisation selon l'une des revendications 1 et 2, la capacité d'absorption $w_\infty$(A) étant inférieure à 10% et de préférence inférieure à 5%.

**4.** Utilisation selon l'une des revendications 1 à 3, les capacités d'absorption d'eau de A $w_\infty$ (A) et de B $w_\infty$ (B) étant telles que le rapport $w_\infty$ (B)/$w_\infty$ (A) est supérieur à 1 et de préférence supérieur à 20.

**5.** Utilisation selon la revendication 4 dans laquelle $w_\infty$(A) est inférieur à 5 et $w_\infty$ (B)/$w_\infty$ (A) est supérieur à 20.

**6.** Utilisation selon l'une des revendications 1 à 5, le bloc A présentant une température de transition vitreuse (Tg(A) ) inférieure à 30˚C et de préférence comprise entre -120˚C et 0˚C.

**7.** Utilisation selon l'une des revendications 1 à 6, le bloc B présentant une température de transition vitreuse (Tg(B)) supérieure à 50˚C et de préférence comprise entre 20˚C et 160˚C.

**8.** Utilisation selon l'une des revendications 1 à 7, le bloc B étant obtenu par la polymérisation d'au moins un monomère choisi dans le groupe contenant les monomères hydrophiles tels que l'acide acrylique, l'acide méthacrylique , l'acrylamide et le diméthylacrylamide.

**9.** Utilisation selon la revendication 8, le monomère hydrophile étant le dimléthylacrylamide.

**10.** Utilisation selon l'une des revendications 1 à 9, le bloc A étant obtenu par polymérisation de l'acrylate de butyle.

**11.** Utilisation selon l'une quelconque des revendications 1 à 10 comprenant en outre une étape de préparation de patch ou prothèses, à partir de ladite composition adhésive.

**12.** Utilisation selon l'une quelconque des revendications 1 à 10, comprenant en outre une étape de préparation de pansements, à partir de ladite composition adhésive.

**13.** Utilisation selon l'une quelconque des revendications 1 à 10, comprenant en outre une étape de préparation d'étiquettes, à partir de ladite composition adhésive.

**Claims**

**1.** Use of a block copolymer having at least one rigid hydrophilic block (B) as a minor phase dispersed in the form of nanodomains, and at least one hydrophobic block (A) with an elastomeric nature as a major phase and having a water absorption capacity $w_\infty$ (A) of less than 20%, as a binder in an adhesive composition for moist medium adhesion.

**2.** Use according to claim 1 in which said copolymer has the following structure:

$$[\ (A)x - (B)]n,$$

in which x is in the range from 1 to 8, n is a whole number in the range from 1 to 3, A and B respectively represent from 50 to 99%, preferably from 65% to 95% by weight, and from 1 to 50%, preferably from 5% to 35% by weight of the total copolymer weight, the number average molar mass (Mn) of the block copolymer being in the range from 5,000 g/mol to 300,000 g/mol, with a polydispersity index in the range from 1.1 to 3.

**3.** Use according to one of claims 1 and 2 wherein the water absorption capacity $w_\infty$ (A) is less than 10% and preferably less than 5%.

**4.** Use according to any of claims 1 to 3 wherein the water absorption capacities of A, $w_\infty$ (A), and of B, $w_\infty$ (B), are such that the ratio $w_\infty$ (B)/ $w_\infty$ (A) is more than 1 and preferably more than 20.

**5.** Use according to claim 4 wherein $w_\infty$ (A) is less than 5 and $w_\infty$ (B)/ $w_\infty$ (A) is more than 20.

**6.** Use according to any of claims 1 to 5 wherein said hydrophilic block A has a glass transition temperature (Tg(A)) of less than 30˚C, preferably in the range from -120˚C to 0˚C.

**7.** Use according to any of claims 1 to 6 wherein said block B has a glass transition temperature (Tg(B)) of more than 50˚C, preferably in the range from 20˚C to 160˚C.

8. Use according to any of claims 1 to 7 wherein the block B is obtained by polymerizing at least one monomer selected from the group containing hydrophilic monomers such as acrylic acid, methacrylic acid, acrylamide and dimethylacrylamide.

9. Use according to claim 8 wherein B is obtained by polymerizing dimethylacrylamide.

10. Use according to any of claims 1 to 9 wherein the block A is obtained by polymerizing butyl acrylate.

11. Use according to any of claims 1 to 10 comprising a step of preparing patches or prostheses starting from said adhesive composition.

12. Use according to any of claims 1 to 10 comprising a step of preparing dressings starting from said adhesive composition.

13. Use according to any of claims 1 to 10 comprising a step of preparing labels starting from said adhesive composition.

**Patentansprüche**

1. Verwendung eines Blockcopolymers, das mindestens einen starren hydrophilen Block (B), der die nicht überwiegende Phase bildet, die in Form von Nanodomänen dispergiert ist, sowie mindestens einen hydrophoben Block (A) aufweist, der Elastomercharakter und ein Wasserabsorptionsvermögen $w_\infty$ (A) von weniger als 20 % besitzt und die kontinuierliche, überwiegende Phase bildet,
als Bindemittel in einer Kleberzusammensetzung zum Kleben in feuchtem Milieu.

2. Verwendung nach Anspruch 1, wobei das Blockcopolymer die nachstehende allgemeine Struktur

$$[(A)x\text{-}(B)]n$$

besitzt,
wobei
x eine Zahl im Bereich von 1 bis 8 ist,
n eine ganze Zahl von 1 bis 3 ist,
A und B jeweils 50 bis 95 Gew.-% und vorzugsweise 5 bis 35 Gew.-%, bezogen auf das Gesamtgewicht des Copolymers, ausmachen,
das Zahlenmittel der Molmasse (Mn) des Copolymers 5000 bis 300 000 g/mol beträgt und der Polydispersitätsindex im Bereich von 1,1 bis 3 liegt.

3. Verwendung nach Anspruch 1 oder 2, wobei das Wasserabsorptionsvermögen $w_\infty$ (A) kleiner als 10 % und vorzugsweise kleiner als 5 % ist.

4. Verwendung nach einem der Ansprüche 1 bis 3, wobei das Wasserabsorptionsvermögen $w_\infty$ (A) von A und das Wasserabsorptionsvermögen $w_\infty$ (B) von B so sind, dass das Verhältnis $w_\infty$ (B)/$w_\infty$ (A) größer als 1 und vorzugsweise größer als 20 ist.

5. Verwendung nach Anspruch 4, wobei $w_\infty$ (A) kleiner als 5 und $w_\infty$ (B)/$w_\infty$ (A) größer als 20 sind.

6. Verwendung nach einem der Ansprüche 1 bis 5, wobei der Block (A) eine Glasübergangstemperatur (Tg(A)) unter 30 ˚C und vorzugsweise im Bereich von -120 bis 0 ˚C aufweist.

7. Verwendung nach einem der Ansprüche 1 bis 6, wobei der Block (B) eine Glasübergangstemperatur (Tg(B)) von über 50 ˚C und vorzugsweise im Bereich von 20 bis 160 ˚C besitzt.

8. Verwendung nach einem der Ansprüche 1 bis 7, wobei der Block B durch Polymerisation mindestens eines Monomers erhalten ist, das aus der Gruppe ausgewählt ist, die hydrophile Monomere wie Acrylsäure, Methacrylsäure, Acrylamid und Dimethylacrylamid enthält.

9. Verwendung nach Anspruch 8, wobei das hydrophile Monomer Dimethylacrylamid ist.

10. Verwendung nach einem der Ansprüche 1 bis 9, wobei der Block (A) durch Polymerisation von Butylacrylat erhalten ist.

11. Verwendung nach einem der Ansprüche 1 bis 10, die ferner einen Schritt der Herstellung eines Pflasters oder zur Befestigung von Prothesen mit dieser Kleberzusammensetzung umfasst.

12. Verwendung nach einem der Ansprüche 1 bis 10, die ferner einen Schritt der Herstellung von Verbandmaterial aus der Kleberzusammensetzung umfasst.

13. Verwendung nach einem der Ansprüche 1 bis 10, die ferner einen Schritt der Herstellung von Etiketten aus der Kleberzusammensetzung umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 9901998

- FR 2789991

**Littérature non-brevet citée dans la description**

- **Mancinelli P.A.** Pressure Sensitive Tape Council. *Seminar Proceeding,* 02 Mai 1989, 161-181
- *International Journal of Adhesion & Adhesives,* 2002, vol. 22, 37-40

- **G. Holden.** Thermoplastic elastomers. Carl Hanser Verlag, 1996